(19) Europäisches Patentamt
European Patent Office
Office européen des brevets

(11) **EP 1 694 484 B1**

(12) **EUROPÄISCHE PATENTSCHRIFT**

(45) Veröffentlichungstag und Bekanntmachung des Hinweises auf die Patenterteilung:
**23.01.2013  Patentblatt 2013/04**

(21) Anmeldenummer: **04790931.2**

(22) Anmeldetag: **27.10.2004**

(51) Int Cl.:
*B29C 33/56* (2006.01)       *B29C 45/37* (2006.01)
*B29C 45/73* (2006.01)       *B29C 33/38* (2006.01)

(86) Internationale Anmeldenummer:
**PCT/EP2004/012158**

(87) Internationale Veröffentlichungsnummer:
**WO 2005/061196 (07.07.2005 Gazette 2005/27)**

(54) **GLANZGRADEINSTELLUNG**

GLOSS ADJUSTMENT

REGLAGE DU TAUX DE LUISANCE

(84) Benannte Vertragsstaaten:
**AT BE BG CH CY CZ DE DK EE ES FI FR GB GR HU IE IT LI LU MC NL PL PT RO SE SI SK TR**

(30) Priorität: **17.12.2003  DE 10359321**

(43) Veröffentlichungstag der Anmeldung:
**30.08.2006  Patentblatt 2006/35**

(73) Patentinhaber: **Oerlikon Trading AG, Trübbach**
**9477 Trübbach (CH)**

(72) Erfinder: **MUMME, Frank**
**55425 Waldalgesheim (DE)**

(74) Vertreter: **Bockhorni & Kollegen**
**Elsenheimerstraße 49**
**80687 München (DE)**

(56) Entgegenhaltungen:
EP-A- 0 767 038     DE-A- 19 937 707
US-A- 3 734 449     US-A- 5 362 226
US-A- 5 728 328     US-A1- 2003 047 823

• PATENT ABSTRACTS OF JAPAN Bd. 2002, Nr. 08, 5. August 2002 (2002-08-05) & JP 2002 096362 A (TEIJIN CHEM LTD), 2. April 2002 (2002-04-02)
• PATENT ABSTRACTS OF JAPAN Bd. 2003, Nr. 09, 3. September 2003 (2003-09-03) & JP 2003 136564 A (MITSUBISHI MATERIALS CORP), 14. Mai 2003 (2003-05-14)
• PATENT ABSTRACTS OF JAPAN Bd. 1998, Nr. 12, 31. Oktober 1998 (1998-10-31) & JP 10 193402 A (NIPPON PORIKEMU KK), 28. Juli 1998 (1998-07-28)
• PATENT ABSTRACTS OF JAPAN Bd. 1995, Nr. 04, 31. Mai 1995 (1995-05-31) & JP 07 001463 A (ASAHI CHEM IND CO LTD), 6. Januar 1995 (1995-01-06)

## Beschreibung

Die vorliegende Erfindung betrifft ein Verfahren und eine Vorrichtung zum Spritzgießen von schmelzflüssigen Werkstoffen. Weiter ist Gegenstand der Erfindung eine vorteilhafte Gestaltung von Beschichtungen von Spritzgussvorrichtungen, um dadurch den Glanz der Oberfläche des entstehenden Spritzgussteils einzustellen.

Bei der Produktion von Spritzgussteilen, insbesondere Spritzgussteilen aus Kunststoffen, entsteht oft ein Zielkonflikt zwischen den Oberflächeneigenschaften eines Kunststoffs und somit seiner optischen Erscheinung sowie seinen übrigen Eigenschaften, die die technische Anwendbarkeit des Spritzgussteils beeinflussen. Ein bekanntes Beispiel hierfür ist der Kunststoff Polypropylen (PP), der eine optisch sehr vorteilhafte Oberflächenbeschaffenheit des fertigen Spritzgussteils aufweist, falls, wie häufig gefordert, eine matt erscheinende, nicht spiegelnde Oberfläche erwünscht ist. Allerdings sind der Kratzfestigkeit von Polypropylen Grenzen gesetzt, die den Anwendungsspielraum naturgemäß verringern. Jedoch ist es für viele Anwendungsfälle wesentlich, Kunststoffe mit einer höheren Kratzfestigkeit zu verwenden. Ein Beispiel hierfür ist beispielsweise der Kunststoff Acryl-Butadien-Styrol (ABS), der jedoch wiederum insoweit ungünstige Oberflächeneigenschaften aufweist, was die Abbildungsgenauigkeit beim Formgebungsprozess im Fall von Spritzgussteilen betrifft. Will man auch mit dem Kunststoff ABS einen Oberflächeneindruck erreichen, der matt und nicht hochglänzend ist bzw. keine Struktur mit vielen glänzenden Stellen aufweist, so muss man eine Rauhigkeitsstruktur der Kunststoffoberfläche erzeugen, die das Licht diffus streut und nicht gleich einem Spiegel zurückwirft.

Die Oberflächenqualität eines Spritzgussteils hängt beim Herstellen des Spritzgussteils von dem Druck, der Temperatur des eingespritzten Werkstoffs und der Zeitdauer bis zur Erstarrung einer Oberflächenschicht des Werkstoffs ab. Dabei kann der Werkstoff prinzipiell jedes Material sein, das die Eigenschaft aufweist, sich bei Erwärmung zu verflüssigen oder zumindest in einem fließfähigen Zustand überzugehen, und bei darauffolgender Abkühlung ohne Veränderung oder Zerstörung des Werkstoffs wieder zu erstarren. Dies ist für viele Werkstoffe, u. a. thermoplastische Kunststoffe, Glas, Elastomere und auch bis zu einem gewissen Maß für duroplastische Kunststoffe der Fall, wenn bei letzteren während der Formgebung die Bildung des Duroplastes beispielsweise durch eine Molekülvernetzung bei Erwärmung und nachfolgender Abkühlung stattfindet.

Das Spritzgießen besteht aus den Schritten des Einbringens des geschmolzenen Werkstoffs in ein temperiertes bzw. gekühltes Werkzeug unter Druck und Abkühlen des Werkstoffs bis zu einer so weitgehenden Erstarrung, dass das Spritzgussteil aus der Form entnommen werden kann. Als regelbare Größen, die die Oberflächenbeschaffenheit des Spritzgussteils bestimmen, stehen somit im wesentlichen der Druck, die Temperatur des geschmolzenen Werkstoffs beim Spritzgießen und die Werkzeugtemperatur, die durch die Kühlleistung geregelt wird, zur Verfügung. Hiervon kann der Druck nur in engen Grenzen geregelt werden, da ein Mindestdruck erforderlich ist, um das vollständige Ausfällen der Form sowie eine gewisse Geschwindigkeit des Spritzgießvorgangs zu erreichen. Nach oben wird der Druck durch die maximalen Kräfte begrenzt, die auf die Form einwirken dürfen. Die Temperatur des Werkstoffs im flüssigem Zustand wird durch die Werkstoffeigenschaften vorgegeben. Hier kann es bei zu geringer Temperatur zu Entmischungserscheinungen kommen, falls ein Stoffgemisch vorliegt, bzw. zu einer zu geringen Fließfähigkeit und zu großen Viskosität, sowie im Fall von sehr hohen Temperaturen zur Zerstörung des Werkstoffs selbst.

Nach dem Stand der Technik ist es bisher möglich, die Oberflächen der Form so zu bearbeiten, dass sie eine Rauhigkeit aufweisen, die beispielsweise die oben erwähnte diffuse Streuung des Lichtes erreichen würde. Dies kann beispielsweise durch erodierte oder photogeätzte Oberflächen erreicht werden. Jedoch kommt es beim Versuch, diese sehr feine Oberflächenstruktur auf das Spritzgussteil zu übertragen zu Glanzgradunterschieden, da in bestimmten Bereichen die Feinstruktur nicht abgebildet wird und Flecken hohen Glanzes entstehen. Dies beruht vor allem auf sogenannten "Einfriereffekten", bei denen der Werkstoff erstarrt, bevor er bis in die feine Struktur der Oberfläche vorgedrungen ist. Solche Glanzunterschiede können auch nur lokal auftreten, wenn durch unterschiedliche Abkühlverhältnisse die Abformung der Oberfläche nur in bestimmten Bereichen verhindert wird oder eine schnellere Schwindung des Spritzgussteils hervorgerufen wird.

Für die Bestimmung der optischen Eigenschaften, insbesondere eines Kunststoffgegenstands sind der Glanzgrad, der Farbton und die Helligkeit maßgebliche Faktoren. Bei den Glanzgraden wird im allgemeinen unterschieden zwischen hochglänzend, glänzend, halbglänzend/seidenglänzend, halbmatt/seidenmatt, matt und stumpfmatt, wobei die einzelnen Stufen mit unterschiedlichen Messwinkeln eines Glanzmessgeräts gemessen werden. Nach der Begriffsnorm DIN 55 945 ist Glanz ein Sinneseindruck, der durch die Reflexion von Lichtstrahlen an der Oberfläche einer Beschichtung entsteht und vom menschlichen Auge wahrgenommen wird. Bei einer glatten, matten Oberfläche wird das auffallende Licht gleichmäßig in alle Richtungen gestreut und reflektiert. Eine glatte, hochglänzende Oberfläche reflektiert das sichtbare Licht dagegen gerichtet und ohne Streuung, wobei Einfalls- und Ausfallwinkel immer gleich sind. Zur Bestimmung von Messwerten, die mit dem visuellen Eindruck bei unterschiedlichen Glanzgraden gut vergleichbar sind, muss bei Messungen mit Glanzmessgeräten der Einfallswinkel des sichtbaren Lichtes variiert werden. Im Übergangsbereich zwischen glänzend und matt erfolgt die Messung unter 60°. Wie bereits oben ausgeführt wurde, werden für insbesondere spritzgegossene Kunststoffprodukte jedoch in vielen Anwendungsfällen matte Oberflächen bevorzugt.

Für den Farbwert L gilt, dass für die Messung in der Praxis meistens das von Judd und Hunter entwickelte und 1976 normierte L*, A*, a*, b*-System (DIN 6174, CIE LAB 1976) angewendet wird. Hierbei ergibt der L*-Wert die Luminosität, also die Helligkeit (0 bis 100) an und die beiden Farbkanäle a* für Werte von Grün bis Rot und b* für Werte von Blau bis Gelb (jeweils von -127 bis 128).

Wie dargelegt, kann man die für die Oberfläche von insbesondere Kunststoffgegenständen maßgeblichen Größen Glanzgrad und Farbwert L* mit entsprechenden Geräten messen, wodurch Werte erhalten werden, die vom subjektiven Empfinden des menschlichen Auges unabhängig sind und damit auf einer objektiven Basis miteinander verglichen werden können.

Dadurch wird eine relativ teure und aufwendige Nachbehandlung, beispielsweise eine Lackierung bestimmter Kunststoffteile erforderlich, wenn aufgrund der sonstigen Anforderungen Kunststoffe gewählt werden müssen, die zu dem eben beschriebenen Verhalten neigen.

Das gleichmäßig matte Aussehen der Oberfläche wäre aber erreichbar, wenn die Kunststoffobefläche eine ganz exakte Abformung der Oberfläche des Formwerkzeug bis in die Feinstruktur wäre.

Der Weg, durch eine höhere Temperatur des Formwerkzeugs eine genauere Abformung der Oberfläche zu erreichen hat den Nachteil, dass eine längere Kühlzeit und somit längere Zykluszeit erforderlich ist. Weiter kommt es zur stärkeren Ausbildung von Einfallstellen, da der Kunststoff stärker relaxiert.

Weiter ist der Stand der Technik, die Oberflächen der Spritzgussformen für Kunststoffe mit dünnen Beschichtungen aus Hartmetallen, insbesondere Metallnitrid- oder Metallcarbidverbindungen zu versehen. Dadurch werden die Hafteigenschaften der Kunststoffe, d. h. der für das Herauslösen aus der Form benötigte Kraftaufwand verringert. Diese Beschichtungen dienen auch dazu, den Verschleiß der Formoberfläche aufgrund ihrer ausgeprägt guten Widerstandskraft gegen mechanischen Abrieb zu verringern. Dabei ist es jedoch wünschenswert, diese Beschichtungen so dünn wie irgend möglich aufzubringen, damit die Maßhaltigkeit der Spritzgussform noch gewährleistet ist bzw. nicht bereits bei der Herstellung der Spritzgussform eine spätere Maßveränderung durch die Beschichtung berücksichtigt werden muss.

Das Dokument US-A5362 226 offenbart ein Verfahren zum spritzgiessen, bei dem die Formuberfläche mit einer thermisch isolierenden Beschichtung versehen ist, um eine möglichst spiegelnde Oberfläche zu erzielen.

Es ist daher Aufgabe der vorliegenden Erfindung, eine Spritzgussverfahren und ein Spritzgussvorrichtung zur Verfugung zu stellen, mit dem bzw. der es möglich ist, eine feinstrukturierte Oberfläche, insbesondere eine Oberfläche mit einer bestimmten Rauhigkeit, exakt auf das zu bildende Spritzgussteil zu übertragen und dadurch die Oberflächeneigenschaften des Spritzgussteils zu beeinflussen.

Diese Aufgabe wird durch ein Verfahren mit den Merkmalen des Anspruchs 1 sowie eine. Vorrichtung mit den Merkmalen des Anspruchs 15 gelöst.

Überraschend wurde festgestellt, dass durch entsprechende Abstimmung der Dicke der Beschichtung mit dem Wärmeeindringkoeffizienten des Schichtmaterials der Beschichtung insbesondere bei spritzgegossenen Kunststoffprodukten ein gewünschter Glanzgrad und/oder Farbwert erreicht werden kann und damit auch eine entsprechende Abbildegenauigkeit, wobei nach Maßgabe der Erfindung ein vorgegebener Glanzgrad 60° und/oder Farbwert L* durch die Abstimmung zwischen Beschichtungsdicke und Wärmeeindringkoeffizienten des Schichtmaterials erreicht wird.

Mit der Erfindung ist es möglich, Glanzgradunterschiede zu vermeiden, die ansonsten nur schwer oder gar nicht behoben werden können. Durch die erfindungsgemäßen Maßnahmen wird erreicht, dass der Einfriereffekt der Kunststoffschmelze verzögert wird, wodurch die Abbildegenauigkeit der Schmelze in Anpassung an die Werkzeugkontur opimiert wird. Beim Einspritzen der Kunststoffschmelze wird zwar die Werkzeugwandtemperatur kaum verändert, jedoch werden normalerweise die Randschichten der Kunststoffschmelze spontan um mehr als 100 K abgeschreckt, was zur Folge hat, dass die Kunststoffschmelze an der Formoberfläche schlagartig einfriert bzw. sich verfestigt, wodurch im Prinzip eine ungleichmäßige bzw. nicht entsprechend konturierte Abformung der Werkzeugformoberfläche durch die einströmende Kunststoffschmelze erreicht wird. Durch die erfindungsgemäßen Maßnahmen wird unter anderem erreicht, dass die Kontakttemperatur erhöht wird, so dass das Einfrieren der Kunststoffrandschichten an der Werkzeugwand verzögert wird. Dadurch ist es möglich, dass eine weitgehende Abbildegenauigkeit der Schmelze von der Werkzeugkontur erreicht wird, wodurch eine hohe Genauigkeit des Fertigteils erzielt wird. Die Kunststoffoberfläche besitzt somit weitgehend die Rauhigkeit bzw. Feinstruktur der WerkzeugFormoberfläche, so dass sich eine maximale Mattigkeit erreichen lässt. Dadurch ergeben sich die angestrebten hervorragenden Glanzgradeigenschaften und Farbwerte L*.

Völlig überraschend entsteht dadurch, dass anstelle dieser bislang realisierten ausgeprägt dünnen Beschichtung, nunmehr eine etwas dickere Beschichtung mit einem Material verwendet wird, das eine geringe Wärmeeindringfähigkeit hat, eine bessere Abbildung der Feinstruktur der Oberfläche. Aus der Wärmeeindringfähigkeit, die durch periodisches Einbringen einer definierten Wärmemenge (entspr. Wärmeimpuls) mit einer Modulationsfrequenz f in die Oberfläche eines Prüfkörpers und Messung der modulierten Temperatur bestimmt wird, kann die Eindringtiefe als thermische Diffusionslänge abgeleitet werden. Je bessere isolierende Eigenschaften ein Beschichtungsstoff oder Material aufweist, desto geringer ist dessen Wärmeeindringfähigkeit. Diese ist jedoch entscheidend für die sich im Mittel bildende Eindringtiefe, da das Formwerkzeug im Wechsel immer wieder erwärmt wird und durch die Kühlung abgekühlt wird, wenn neuer heißer geschmolzener Werkstoff zugeführt wird. Wenn die Beschichtung nun mit einer optimierten, gegenüber den bisher bekannten Anwendungen größeren Dicke gewählt wird, kann die Oberflächentemperatur erhöht werden und näher an die Temperatur des geschmolzenen Werkstoffs herangeführt werden. Dadurch erstarrt eine oberste Schicht des Werkstoffs nicht sofort bei Kontakt mit der Oberfläche der Beschichtung und der Werkstoff kann bei gleichen Druckverhältnissen und gleicher Temperatur zum Zeitpunkt der Spritzgießens des Werkstücks tiefer in die Struktur der Oberfläche des Formwerkzeugs eindringen und somit dessen Rauhigkeit genauer abbilden.

In vorteilhafter Weise kann die Beschichtung aus Titan-Nitrid (TiN), Titan-Carbon-Nitrid (TiCN), Chrom-Nitrid (CrN), Wolfram-Carbid-Carbon (WC/C) oder Titan-Aluminium-Nitrid (TiAlN) gebildet sein. Es können auch mehrere dünne Schichten aus diesen Materialien übereinander abwechselnd oder in Kombination angeordnet werden und dadurch der gesamte Wärmetransport in das Material der Form bzw. zu dem Kühlmittel der Form so eingestellt werden, dass sich die gewünschte günstige Oberflächentemperatur der obersten Beschichtung einstellt. Weiter können prinzipiell thermisch gut isolierende Schichten wie z.B. $Al_2O_3$, $(AlCr)_2O_3$, $SiO_2$ verwendet werden, sofern sie günstige Enthaftungseigenschaften aufweisen.

Vorteilhaft können auch die sonstigen Eigenschaften der genannten Materialien genutzt werden, wie die Förderung der Verschleißfestigkeit und Verbesserung der Hafteigenschaften dahingehend, dass das Entnehmen aus der Form erleichtert wird.

Will man beispielsweise ABS-Spritzgussteile mit einem zu PP-Spritzgussteilen gleichsam identischen Glanzgrad bzw. Farbwert herstellen, genügt es eine PP-Form oder eine zumindest was die Oberflächenfeinstruktur betrifft identische Form mit einer schichtdefinierten Schichtdicke zu beschichten, sofern diese Schicht eine deutlich geringere Wärmeeindringfähigkeit als der Formwerkstoff aufweist.

Vor allem bei Benutzung des Materials Titan-Aluminium-Nitrid (TiAlN) erweist sich eine Dicke der Beschichtung zwischen 7 $\mu$m und 11 $\mu$m und insbesondere eine Dicke der Beschichtung von 8 $\mu$m +/- 1 $\mu$m als günstig. Weiter vorteilhaft kann als schmelzflüssiger Werkstoff ein Acryl-Butadien-Styrol-Kunststoff verwendet werden.

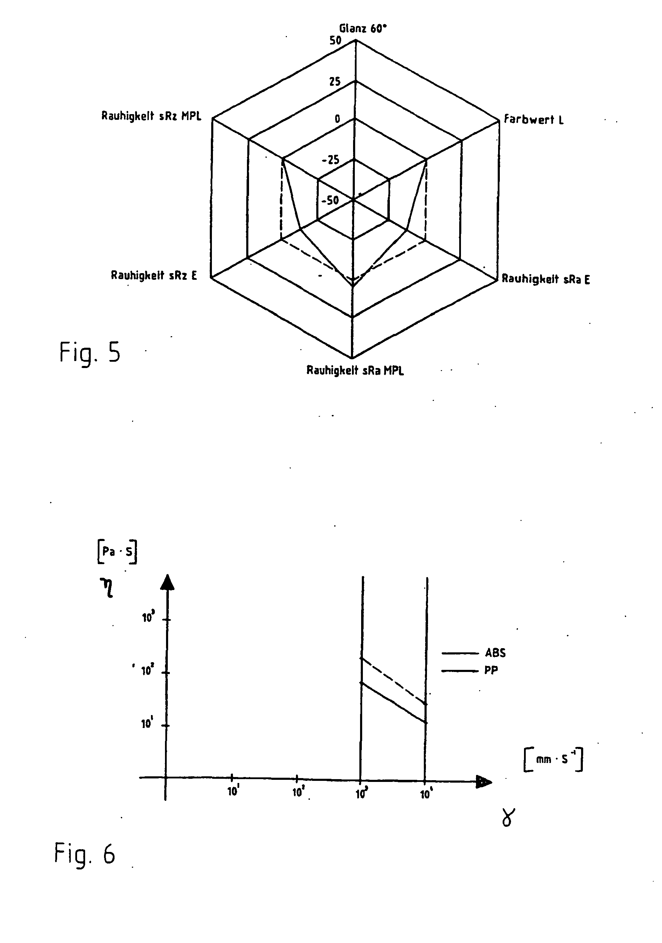

Insbesondere die Kombination einer Beschichtung aus Titan-Aluminium-Nitrid und dem Kunststoff ABS kann bei einer geeigneten Ausbildung der Formoberfläche ein matter Eindruck der Oberfläche erreicht werden. Der Kunststoff ABS neigt üblicherweise dazu, Glanzstellen auszubilden und erfordert ein Nachlackieren, was teilweise auch auf die gegenüber PP niedrigeren Verarbeitungstemperaturen ( $T_{(ABS)}$= 180° - 260°C, $T_{(PP)}$= 200° - 270°C und der damit verbundenen höheren Viskosität zurückzuführen ist. In der Fig. 6 ist in einem Diagramm die Viskosität $\eta$ von ABS und PP über der Schergeschwindigkeit $\gamma$ als x-Achse in dem für das Spritzgießen relevanten Bereich von $10^3$ bis $10^4$ [mm·s$^{-1}$] aufgetragen. Bei den vorliegenden Versuchen wurden Verarbeitungstemepraturen von 230°C für PP und 250°C für ABS ("leichtfließend") angewandt. Daher können erhebliche Kosten einer Nachbearbeitung durch die vorliegende Erfindung eingespart werden. Gleichzeitig ist es möglich, die sonstigen positiven Eigenschaften des Kunststoffs ABS für Spritzgussteile zu nutzen. Weiter vorteilhaft ist es, die Formoberfläche mit einer Struktur zu versehen, insbesondere mit einer Struktur die eine Rauhigkeit aufweist, die wenn sie durch den erstarrten Werkstoff exakt abgeformt wird, ein gewünschtes mattes Aussehen der Spritzgussteiloberfläche ergibt. Typische Ra Werte von Formoberflächen für die Herstellung von Abdeckungen für Autoarmaturen bzw. für den Architekturbereich oder auch für Kunststoffgegenstände des täglichen Gebrauchs sind im Bereich zwischen 3 & 11 $\mu$m. Zur Messung des Mittenrauwerts Ra wird der Durchschnittswert der Erhebungen der relativen Vertiefungen in Bezug auf eine Mittellinie über eine Prüfstrecke gemessen.

Vor allem in Verbindung mit einer Beschichtung aus Titan-Aluminium-Nitrid von 8 $\mu$m +/- 1 $\mu$m und der Verwendung des schmelzflüssigen Werkstoffs ABS kann damit eine Mattigkeit und Oberflächenbeschaffenheit des Spritzgussteils erreicht werden, die größtenteils der des Kunststoffs Polypropylen (PP) entspricht. Zwischen den Formoberflächen der Vorrichtung zum Spritzgießen und der Beschichtung kann eine Haftschicht angeordnet sein, die beispielsweise aus Titan, TiAl, Chrom oder Titan-Nitrid bestehen kann. Dadurch wird eine sichere Haftung der Beschichtungen, vor allem auf Stahloberflächen erreicht.

Nachfolgend wird die Erfindung anhand von bevorzugten Ausführungsbeispielen und den beigefügten Zeichnungen näher erläutert. In den Zeichnungen zeigt

Fig. 1     schematisch ein Ausführungsbeispiel einer Vorrichtung zum Spritzgießen im Moment des Einspritzens eines schmelzflüssigen Kunststoffs ABS,

Fig. 2     den mit II bezeichneten Ausschnitt im Bereich der Formoberfläche der in Fig. 1 dargestellten Vorrichtung,

Fig. 3     in einem Diagramm einen Vergleich der Wärmeeindringfähigkeit von vier Beschichtungsstoffen im Vergleich zu Stahl,

Fig. 4     in einem Diagramm den Verlauf der Temperatur an der Grenzfläche zwischen Form und Kunststoff,

Fig. 5     in einem Diagramm die Oberflächeneigenschaften bestimmende Parameter der Kunststoffe PP und ABS sowie zweie Vergleichsgrößen einer Vorrichtung ohne Beschichtung für PP sowie mit Beschichtung für ABS und

Fig. 6    in einem Diagramm die Viskosität von ABS und PP aufgetragen über der Schergeschwindigkeit in dem für das Spritzgießen relevanten Bereich.

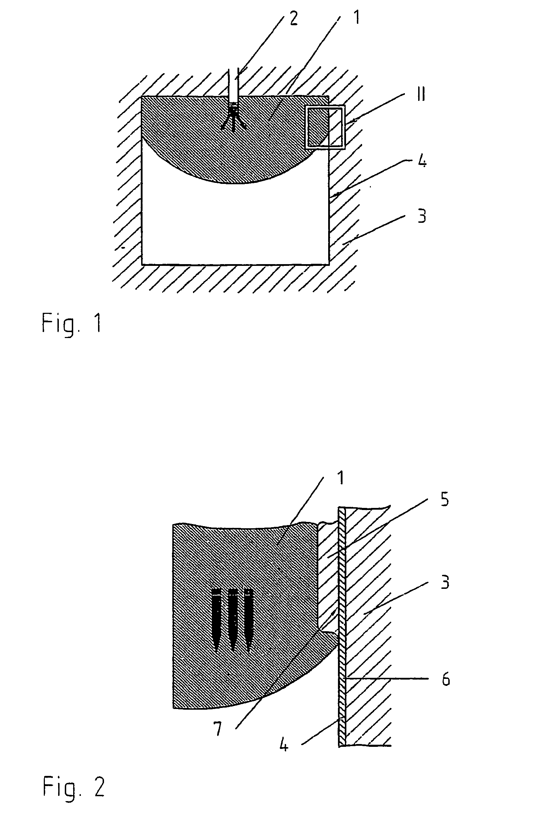

Fig. 1 zeigt stark schematisiert ein erstes Ausführungsbeispiel einer erfindungsgemäßen Vorrichtung zum Spritzgießen von schmelzflüssigem Werkstoff, hier am Beispiel des Kunststoffs ABS 1. Der flüssige Kunststoff 1 wird über eine Zuführöffnung 2 in die Form 3 eingebracht. Die Form 3 weist eine Formoberfläche 4 auf, die mit einer Hartstoffbeschichtung versehen ist.

Fig. 2 zeigt in einem Detailausschnitt, der in Fig. 1 mit II bezeichnet ist, den Bereich, in dem die Formoberfläche 4 erstmalig von dem Kunststoff 1 benetzt wird. Dabei bildet sich eine sofort erstarrte Grenzschicht 5 des Kunststoffs 1 aus, in der der Kunststoff unter die Schmelztemperatur abfällt und in den festen Aggregatszustand übergeht. Die Formoberfläche 4 ist mit einer Beschichtung 6, im vorliegenden Beispiel aus Titan-Aluminium-Nitrid, versehen. Durch die Pfeile ist die Fließrichtung des die Form ausfüllenden Kunststoffs 1 angedeutet. Durch die Wahl der Schichtdicke der Titan-Aluminium-Nitrid-Beschichtung 6 wird aufgrund der geringeren Wärmeeindringfähigkeit in die Beschichtung der Temperaturverlauf durch die Titan-Aluminium-Nitrid-Beschichtung 6 und die Form 3 während des Abkühlens des Kunststoffs 1 so eingestellt, dass sich an einer Kontaktoberfläche 7 zwischen der Grenzschicht 5 des Kunststoffs 1 und der TiAlN-Beschichtung 6 ein Kontakttemperatur einstellt, die höher ist als es die Kontakttemperatur der Formoberfläche 4 ohne die TiAlN-Beschichtung 6 wäre. Diese Kontakttemperatur liegt jedoch unter der Schmelztemperatur des Kunststoffs 1. Dadurch verbleibt dem Kunststoff 1 während des Erstalrens eine längere Zeit, die Rauhigkeiten der Kontaktfläche 7 der TiAlN-Beschichtung 6 und somit die Rauhigkeit der Formoberfläche 4 abzuformen.

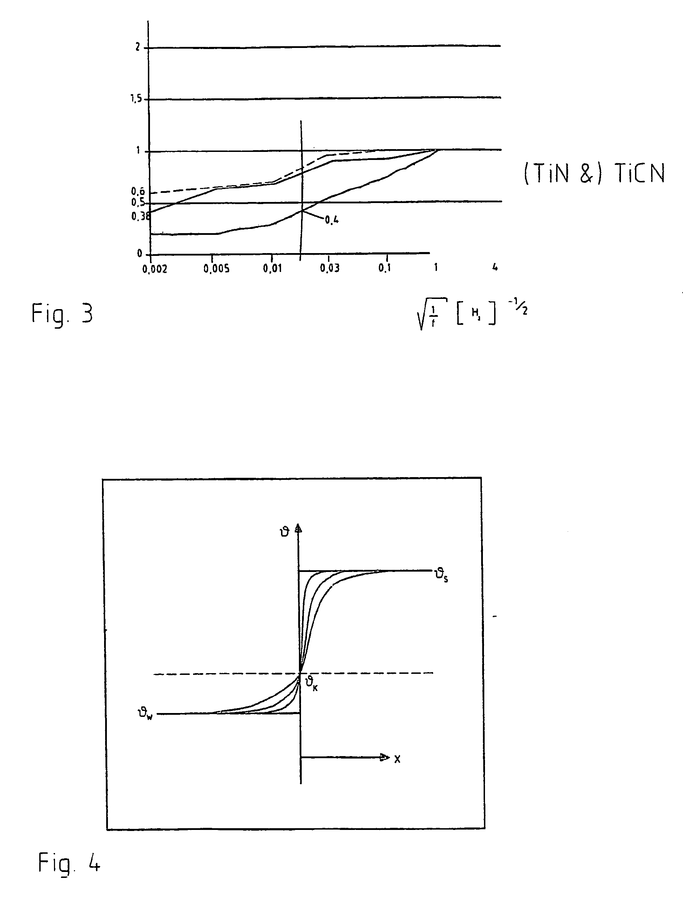

Fig. 3 zeigt in einem Diagramm einen Vergleich der Wärmeeindringfähigkeit von vier verschiedenen Materialien für die Beschichtung im Vergleich zu Stahl, wobei die Beschichtung mit TiAlN durch die durchgezogene mittlere Linie dargestellt ist. Aufgetragen ist auf der γ-Achse der Koeffizient der Wärmeeindringfähigkeit im Vergleich zu dem Material der Form, hier im vorliegenden Ausführungsbeispiel Stahl 1.2.343. Als x-Achse ist die reziproke Quadratwurzel der Frequenz der Wärmeimpulse, aufgetragen. Gepunktet ist eine Wolfram-Carbid/Carbon-Beschichtung, mit durchgezogener Linie, wie bereits erwähnt, die Titan-Aluminium-Nitrid-Beschichtung des vorliegenden Ausführungsbeispiels der Erfindung und gestrichelt eine Chrom-Nitrid-Beschichtung dargestellt. Es zeigt sich, dass die Wärmeeindringfähigkeit mit abnehmender Frequenz, hier größeren Werten der x-Achse sich der von Stahl annähert, wobei der Quotient aus der Wärmeeindringfähigkeit des Materials der Beschichtung zu der Wärmeeindringfähigkeit von Stahl sich 1 nähert. Ist jedoch die Zeitspanne der Einwirkung sehr kurz, so ist die Isolationswirkung der Beschichtung stark ausgeprägt, da der Wärmeabfluss durch die beschichtete Oberfläche behindert wird. Dies führt dazu, dass bei geeigneter Einstellung der Dicke der Beschichtung in einem ersten kurzen Kontakt bei Ausbildung der Grenzschicht 5 in Fig. 1 eine starke Isolationswirkung durch die Titan-Aluminium-Nitrid-Schicht 6 in Fig. 2 eintritt, die das Erstarren des Kunststoffs 1 verzögert und an der Grenzschicht das Abformen der Rauhigkeit der Formoberfläche 4 ermöglicht. Beispielsweise können dem Diagramm in Fig. 3 für den Wert 0,002 entsprechend 250 kHz. für TiAlN ein Verhältnis von 0,38, für WC/C ein Verhältnis von 0,2 und für CrN ein Verhältnis von 0,6 gegenüber dem Referenzwert 1 für Stahl entnommen werden. TiN / TiCN 0,42; Einstellung sollte zumindest < 0,6 bevorzugt < 0,45 sein.

Die Fig. 4 zeigt das Grundschema des Temperaturverlaufs und der Bestimmung einer Kontakttemperatur $\theta_K$ zwischen einer Wandtemperatur $\theta_w$ und einer Temperatur des geschmolzenen Werkstoffs $\theta_S$. Dabei gibt der y-Wert die Temperatur und der x-Wert die Position der Messpunkts in der Wand bzw. in positiver Richtung im geschmolzenen Kunststoff an. Die Werkzeugwaudtemperatur ändert sich beim Auftreffen des geschmolzenen Werkstoffs nur relativ wenig, da durch die Kühlung eine große Wärmemenge abfließen kann. Typische Größen sind ein Unterschied der Temperatur von weniger als 15 K zum Rand hin. Die Randschicht der Kunststoffschmelze wird jedoch spontan um mehr als 100 K abgekühlt. Die entscheidende Bestimmungsgröße, die Kontakttemperatur $\theta_K$, bestimmt den Grad der Abformung der Rauhigkeit an der Grenzfläche und kann durch den Wärmeeindringkoeffizient e beeinflusst werden. Dieser lässt sich für ein Material aus der Wärmeleitfähigkeit p, der Dichte λ und der spezifischen Wärmekapazität c des Materials erreclinen. Die Berechnung erfolgt dann nach der folgenden Formel:

$$e = \sqrt{\rho \cdot \lambda \cdot c}$$

Mit diesem Wärmeeindringkoeffizienten für die Wand bzw. die Kunststoffschmelze und den Wandtemperaturen und der Temperatur der Kunststoffschmelze lässt sich dann eine Kontakttemperatur $\theta_K$ wie folgt berechnen:

$$\vartheta_K = \frac{e_w \cdot \vartheta_w + e_s \cdot \vartheta_s}{e_w + e_s}$$

Dabei ist $e_w$ die Wärmeeindringtiefe des Wandmaterials, $\theta_w$ die Temperatur des Wandmaterials sowie es die Wärmeeindringtiefe der Kunststoffschmelze und $\theta_S$ die Temperatur der Kunststoffschmelze. Durch geeignete Bestimmung der Kontakttemperatur $\theta_K$, die wie oben dargelegt durch die Dicke der Beschichtung bestimmt werden kann, kann das Erstarren der Kunststoffrandschicht an der Oberfläche der Beschichtung verzögert werden, wodurch die Abformung der Oberfläche der Beschichtungen bzw. der Formoberflächen verbessert wird. Der geschmolzene Kunststoff hat mehr Zeit, sich an die Feinstruktur anzupassen. Die Rauhigkeitszahl Ra der beschichteten Formoberfläche und die Rauhigkeitszahl Ra der sich bildenden Kunststoffoberfläche weichen nur wenig voneinander ab und die Kunststoffoberfläche erhält die gewünschten Eigenschaften wie Glanzgrad und Farbwert.

Da die Beschichtung jedoch insgesamt relativ dünn ist, erreicht man die Verbesserung des Abformverhaltens, ohne die nötige Zeit zur Herstellung des einzelnen Spritzgussteils merklich zu verzögern. Aufgrund der geringen Dicke der Beschichtung wird der Wärmefluss insgesamt nur unwesentlich behindert. Er wird nur im ersten Moment kurzzeitig verzögert. Die Gesamterstarrungszeit des Spritzgussteils liegt somit in derselben Größenordnung wie ohne die Beschichtung.

Fig. 5 zeigt einen Vergleich verschiedener Parameter zwischen den Kunststoffen Polypropylen (PP) und Acryl-Butadien-Styrol-Copolymer (ABS), wobei letzterer mit einer Vorrichtung gemäß dem Ausführungsbeispiel spritzgegossen wurde. Die Referenzwerte (= Nullwert) der spritzgegossenen Musterplatte (MPL) aus Polypropylen (PP) sind mit in gestrichelter Linie, die entsprechenden Werte für eine ABS MPL mit durchgezogener Linie verbunden. Folgende an den MPLs gemessene Eigenschaften werden dargestellt: der Glanzgrad unter einem Winkel von 60°, der über den Hell-/Dunkelanteil bestimmte Farbwert L, die Rauhigkeitszahl Ra, die durch den arithmetischen Mittelwert definiert wird, sowie $R_z$, der arithmetische Mittelwert aus mehreren maximalen Rauhigkeitstiefen von Einzelstrecken. Daneben sind noch die Rauhigkeiten Ra und Rz der Form E aufgetragen. Dabei wurde das PP in eine unbeschichtete Form gespritzt und das ABS in eine beschichtete Form. Gute Werte für die Rauhigkeit Ra, um einen matten Oberflächeneindruck eines Kunststoff zu erreichen, liegen zwischen 3 $\mu$m und 11 $\mu$m. Als Vorzugswert für die Rauhigkeit Ra hat sich ein Wert von insbesondere 3,3 $\mu$m herausgestellt, wenn man eine ideale matte Oberfläche, wie beispielsweise für Abdeckung von Kfz-Armaturen erwünscht, erreichen will. Wie die Ausführungsbeispiele zeigen, ergeben sich auch im angegebenen Spektrum hervorragende Werte, siehe das Beispiel mit Ra = 9 $\mu$m. Dabei zeigt es sich, dass die Übereinstimmung im Glanzgrad und im Farbwert sowie in der Rauhigkeitszahl Rz der Musterplatte aus dem Kunststoff ABS und derjenigen aus dem Kunststoff PP bei einer Schichtdicke zwischen 7 und 12 $\mu$m sehr gut, und bei einer Beschichtungsdicke der Schicht aus TiAlN von 8 $\mu$m ± 1 $\mu$m optimal ist. Die vorliegende Fig. 5 stellt die Werte für eine Schichtdicke von ca. 8 $\mu$m dar. Bis auf eine geringfügige Abweichung bei der Rauhigkeitszahl Ra MPL, die unter 5 % liegt, stimmen die bestimmenden Größen, die den Glanzgrad der Oberfläche und den optischen Eindruck der ABS-Musterplatte festlegen mit der PP-Musterplatte weitgehend überein.

Zu dem Ausführungsbeispiel der vorliegenden Erfindung, bei der in eine Form mit Stahloberfläche der Kunststoff ABS spritzgegossen wird, wurden umfangreiche Versuchsreihen durchgeführt. Dabei wurden Musterplatten sowohl aus dem Kunststoff ABS wie auch PP gespritzt und diese miteinander verglichen. Untersucht wurden der Glanzgrad 60°, der Farbwert L*, die Oberflächenrauhigkeit Ra E der Formoberfläche, die Oberflächenrauhigkeit Ra MPL der Musterplatte, die Oberflächenrauhigkeit Rz E der Formoberfläche und die Oberflächenrauhigkeit Rz MPL der Musterplatte. Die zum Spritzgießen verwendete Form ist eine Stahlform mit der Stahlbezeichnung Stippel 1 BB. Die Ergebnisse sind in vier Tabellen als Anhang beigefügt, bei denen

Tabelle 1 Werte für den Kunststoff ABS bei feiner Oberflächenstruktur der Form,

Tabelle 2 Werte für den Kunststoff PP bei feiner Oberflächenstruktur der Form,

Tabelle 3 Werte für den Kunststoff ABS bei grober Oberflächenstruktur der Form und

Tabelle 4 Werte für den Kunststoff PP bei grober Oberflächenstruktur der Form zeigt.

Tabelle 1 zeigt die Werte entsprechend einer feinen Oberflächenstruktur für eine Rauhigkeit Ra E der Formoberfläche von 3,33 $\mu$m und den Kunststoff ABS. In den Spalten 1 bis 3 sind die an der MPL aus einer TiAlN beschichteten Form gemessenen Werte sowie Werte der Form selbst für die Schichtdicken 4 $\mu$m, 8 $\mu$m und 12 $\mu$m angegeben. Die Spalten 4 bis 6 enthalten die zugehörigen Referenzwerte der MPL aus den Formen bzw. der Formen selbst vor deren jeweiliger Beschichtung. Soweit die Werte der Spalten 4 bis 6 sich unterscheiden, sind dies Streuungen der Werte der drei verwendeten Formen. Durch die Beschichtung der Formoberflächen ergibt sich zumeist nur eine geringfügige Zu- oder Abnahme der Rauhigkeit gegenüber der Ausgangsform. So bei der Form mit der Beschichtung von 8 $\mu$m ein Wert Ra E von 3,45 bei einem Ausgangswert Ra E von 3,33 $\mu$m.

Die Abformung der Musterplatte aus ABS aus der beschichteten Form mit der Rauhigkeit Ra E 3,45 ist bei einer Schichtdicke von 8 $\mu$m mit dem Wert Ra MPL 3,40 $\mu$m der Oberfläche der ABS-MPL sehr gut. Der Abformungsfehler beträgt nur ca 1,45%. Für den Glanzgrad unter 60° ergibt sich für die ABS-MPL ein Wert von 2,7 und ein Farbwert L* von 25,43.

In der Tabelle 2 sind zum Vergleich die Werte bei Verwendung des Kunststoffs PP für eine Oberflächenrauhigkeit von Ra 3,33 $\mu$m angegeben. Hier ergeben sich in der 5. Spalte für den Glanzgrad der PP-MPL ein Glanzgrad von 2,5 und ein Farbwert von L* von 24,64. Somit ergibt sich eine sehr gute Übereinstimmung der die optischen Eigenschaften beschreibenden Werte für eine erfindungsgemäß hergestellte ABS-MPL und eine PP-MPL, die zum Vergleich vor der Beschichtung der Form hergestellt wurde. Durch die gewählte Rauhigkeit der Form und die Schichtdicke sowie deren Material können die optischen Eigenschaften Glanzgrad und Farbwert einer ABS-MPL an diejenigen einer PP-MPL aus einer unbeschichteten Form angepasst werden.

Insbesondere bei 8±1 $\mu$m dicken Beschichtungen liegt der Unterschied in der Rauhigkeit zwischen Formoberfläche und mit dieser hergestellter Musterplatte stets in einem Bereich kleiner oder gleich 5%. Für andere Schichtdicken kann meist ein Unterschied kleiner oder gleich 10% eingehalten werden.

In der Tabelle 3 sind die Werte für eine grobe Rauhigkeit von ca. 9 $\mu$m der Formoberfläche bei Herstellung einer ABS-MPL angegeben. Die ersten drei Spalten zeigen die oben bereits erläuterten Werte für TiAlNi Schichtdicken von 4 $\mu$m, 8 $\mu$m und 12 $\mu$m. Die Spalten 4 bis 6 enthalten die zugehörigen Referenzwerte der Form vor bzw. noch ohne Beschichtung. Aus der Tabelle 3 kann beispielsweise entnommen werden, dass die Rauhigkeit Ra E der Formoberfläche von 9 $\mu$m in der 5. Spalte sich durch die Beschichtung mit TiAlN in Dicke von 8 $\mu$m nur geringfügig zu dem Wert 8,79 $\mu$m ändert und dieser sehr genau mit 8,64 $\mu$m durch die ABS-MPL abgebildet wird.

In der Tabelle 4 sind ebenfalls für eine grobe Rauhigkeit von 9 $\mu$m zum Vergleich dieselben Meßgrößen bei Verwendung des Kunststoffs PP angegeben. Der Vergleich des Glanzgrades ergibt beispielsweise für ABS bei einer Schichtdicke von 8 $\mu$m einen Wert von 1,7 gegenüber einem von 1,6 bei einer PP MPL, die in einer unbeschichteten Form gespritzt wurde. Entsprechend ergeben sich bei einer Schichtdicke von 12 $\mu$m ein Wert von 1,7 für ABS und ein Wert von 1,6 für PP.

Durch das erfindungsgemäße Verfahren ist es möglich, aufgrund einer besseren Abbildegenauigkeit der Rauhigkeit und Feinstruktur der Formoberfläche bestimmte schmelzfähige Werkstoffe durch andere zu ersetzen, ohne Einbußen bei der Oberflächenqualität hinzunehmen. Dadurch kann die Nachbehandlung von Oberflächenfehlern eingespart werden, beispielsweise Lackierkosten. Generell können daneben auch sehr fein strukturierte Oberflächen, mit speziellen Mustern oder Eigenschaften umgesetzt werden wie z. B. haptische Eigenschaften. Es ist daher durch das erfindungsgemäße Verfahren möglich, den vergleichsweise griffempfindlichen Kunststoff PP, der sich leicht an eine Formoberflächenkontur anpassen lässt, durch den robusten Kunststoff ABS (ABS ist teurer!) zu ersetzen. Weiter wird durch die Beschichtung, wie bereits nach dem Stand der Technik bekannt, die Oberfläche der Vorrichtung zum Spritzgießen vor Verschleiß geschützt und die Standzeit der Werkzeuge erheblich erhöht.

Tabelle I

| ABS (Cyrolac 6320FB) Ra = 3,3 $\mu$m | | | | | | | |
|---|---|---|---|---|---|---|---|
| Datenspalte | 1 | 2 | 3 | | 4 | 5 | 6 |
| Beschichtung | TiAlN | TiAlN | TiAlN | | unbeschichtet | unbeschichtet | unbeschichtet |
| aufgebr. bzw. vorgesehene Schichtdicke | 4 | 8 | 12 | | 4 | 8 | 12 |
| Glanzgrad 60° | 3,50 | 2,70 | 3,20 | | 3,90 | 3,40 | 4,00 |
| Farbwert L* | 24,88 | 25,43 | 25,57 | | 25,35 | 25,73 | 26,06 |
| | | | | | | | |
| Raubigkeit sRa E | 3,62 | 3,45 | 3,60 | | 3,66 | 3,33 | 3,45 |
| Ranhigkeit sRa MPL | 3,39 | 3,40 | 3,48 | | 3,17 | 3,54 | 3,29 |
| Delta b (sRa E, MPL) | -6,35% | -1,45% | -3,33% | | -13,39% | 6,31% | -4,64% |
| | | | | | | | |
| Rauhigkeit sRz E | 28,26 | 26,93 | 28,64 | | 30,27 | 30,35 | 28,41 |

(fortgesetzt)

| ABS (Cyrolac 6320FB) Ra = 3,3 μm | | | | | | | |
|---|---|---|---|---|---|---|---|
| Datenspalte | 1 | 2 | 3 | | 4 | 5 | 6 |
| Beschichtung | TiAlN | TiAlN | TiAlN | | unbeschichtet | unbeschichtet | unbeschichtet |
| Rauhigkeit sRz MPL | 24,24 | 25,72 | 25,63 | | 28,02 | 28,98 | 26,19 |
| Delta s (sRz E, MPL) | -14,23% | -4,49% | -10,51% | | -7,43% | -4,51% | -7,81% |
| | | | | | | | |
| Delta zu **PP** gespritzt in unbesch. Form | | | | | | | |
| Glanzgrad 60° | -29,63% | -8,00% | -18,52%, | | | | |
| Farbwert L* | -0,04% | -3,21% | -2,61% | | | | |

Tabelle 2

| PP (Hostacom P873F) Ra = 3,3 μm | | | | | | | |
|---|---|---|---|---|---|---|---|
| Datenspalle | 1 | 2 | 3 | | 4 | 5 | 6 |
| Beschichtung | TiAlN | TiAlN | TiAlN | | unbeschichtet | unbeschichtet | unbeschichtet |
| aufgebr. bzw. vorgesehene Schichtdicke | 4 | 8 | 12 | | 4 | 8 | 12 |
| Glanzgrad 60° | 2,4 | 2,3 | 2,4 | | 2,7 | 2,5 | 2,7 |
| Farbwert L* | 24,74 | 24,86 | 25,07 | | 24,87 | 24,64 | 24,92 |
| | | | | | | | |
| Rauhigkeit sRa E | 3,62 | 3,45 | 3,6 | | 3,66 | 3,33 | 3,45 |
| Rauhigkeit sRa MPL | 3,37 | 3,31 | 3,55 | | 3,18 | 3,59 | 3,32 |
| Delta b (sRa E, MPL) | -6,91% | -4,06%, | -1,39% | | -13,11% | 7,81% | -3,77% |
| | | | | | | | |
| Rauhigkeit sRz E | 28,26 | 26,93 | 28,64 | | 30,27 | 30,35 | 28,41 |
| Rauhigkeit sRz MPL | 26,34 | 26,47 | 27,16 | | 25,44 | 28,07 | 28,63 |
| Delta s (sRz E, MPL) | -6,79% | -1,71% | -5,17% | | -15,96% | -7,51% | 0,77% |

Tabelle 3

| ABS (Cyrolac 6320FB) Ra = 9 μm | | | | | | | |
|---|---|---|---|---|---|---|---|
| Datenspalte | 1 | 2 | 3 | | 4 | 5 | 6 |
| Beschichtung | TiAlN | TiAlN | TiAlN | | unbeschichtet | unbeschichtet | unbeschichtet |
| aufgebr. bzw. vorgesehene Schichtdicke | 4 | 8 | 12 | | 4 | 8 | 12 |
| Glauzgrad 60° | 1,7 | 1,7 | 1,7 | | 2 | 2,2 | 1,9 |
| Farbwert L* | 25,1 | 24,95 | 25,02 | | 25,62 | 25,69 | 25,67 |
| | | | | | | | |
| Rauhigkeit sRa E | 10,82 | 8,79 | 10,99 | | 9,82 | 9 | 10,21 |
| Rauhigkeit sRa MPL | 11,92 | 8,64 | 10,65 | | 10,54 | 8,67 | 11,48 |
| Delta b (sRa E, MPL) | 10,17% | -1,71% | -3,09% | | -7,33% | -3,67% | 12,44% |
| | | | | | | | |
| Rauhigkeit sRz E | 76,43 | 66,41 | 121,24 | | 76,67 | 75,53 | 166,03 |
| Rauhigkeit sRz MPL | 94,67 | 68,6 | 77,57 | | 73,69 | 71,38 | 189,05 |
| Delta s (sRz E, MPL) | 23,86% | 3,30% | -36,02% | | -3,89% | -5,49% | -13,86% |
| | | | | | | | |
| Delta zu **PP** gespritzt in unbesch. Form | | | | | | | |
| Glanzgrad 60° | -13,33% | -6,25% | -6,25% | | | | |
| Farbwert L* | -3,00% | -2,80% | -2,25% | | | | |

Tabelle 4

| PP (Hostacom P873F) Ra = 9 μm | | | | | | | |
|---|---|---|---|---|---|---|---|
| Datenspalte | 1 | 2 | 3 | | 4 | 5 | 6 |
| Beschichtung | TiAlN | TiAlN | TiAlN | | unbeschichtet | unbeschichtet | unbeschichtet |
| aufgebr. bzw. vorgesehene Schichtdicke | 4 | 8 | 12 | | 4 | 8 | 12 |
| Glanzgrad 60° | 1,4 | 1,5 | 1,5 | | 1,5 | 1,6 | 1,6 |
| Farbwert L* | 24,35 | 24,39 | 24,40 | | 24,37 | 24,27 | 24,47 |
| | | | | | | | |
| Rauhigkeit sRa E | 10,82 | 8,79 | 10,99 | | 9,82 | 9 | 10,21 |
| Rauhigkeit sRa MPL | 17,92 | 8,74 | 10,56 | | 10,54 | 8,79 | 11,29 |

(fortgesetzt)

| PP (Hostacom P873F) Ra = 9 μm | | | | | | | |
|---|---|---|---|---|---|---|---|
| Datenspalte | 1 | 2 | 3 | | 4 | 5 | 6 |
| Beschichtung | TiAlN | TiAlN | TiAlN | | unbeschichtet | unbeschichtet | unbeschichtet |
| Delta b (sRa E, MPL) | -10,17% | -0,57% | -3,91% | | 7,33% | -2,33% | 10,58% |
| | | | | | | | |
| Rauhigkeit sRz E | 76,43 | 66,41 | 121,24 | | 76,67 | 75,53 | 166,03 |
| Rauhigkeit sRz MPL | 78 | 66,34 | 76,34 | | 76,05 | 77,93 | 88,56 |
| Delta s (sRz E, MPL) | 2,05% | -0,11% | -37,03% | | -0,81% | 3,18% | -46,66% |

**Bezugszeichenliste:**

1   flüssiger Kunststoff ABS
2   Zuführöffnung
3   Form
4   Formoberfläche
5   Grenzschicht
6   TiAlN-Beschichtung
7   Kontaktfläche

**Patentansprüche**

1.  Verfahren zum Spritzgießen von schmelzflüssigen Werkstoffen, insbesondere Kunststoff, in einer Form (3) mit einer mit dem Werkstoff (1) in Kontakt kommenden und mit mindestens einer Beschichtung (6) versehenen Formoberfläche (4) und mit einer Einrichtung zum Temperieren der Formoberfläche (4) mit den Schritten:

    - Versehen der Formoberfläche mit einer Oberflächenstruktur zum Erzielen eines vorgegebenen Glanzgrades 60° und/oder Farbwertes L* für das Spritzgussteil durch im Wesentlichen exakte Reproduzierung der Formoberfläche durch die Oberfläche des Spritzgussteils,
    - Versehen der Formoberfläche mit einer thermisch isolierenden Beschichtung,
    - Steuern der Temperatur der Formoberfläche,
    - Einbringen des schmelzflüssigen Werkstoffs in die Form (3),
    - Temperieren der Formoberfläche (4) durch die Temperierungseinrichtung, so dass der schmelzflüssige Werkstoff in der Form erstarrt,
    - Entformen des Spritzgussteils,

    wobei
    die Dicke der Beschichtung der Formoberfläche (4) in Abstimmung mit dem Wärmeeindringkoeffizienten des Schichtmaterials der Beschichtung so gewählt wird, dass Einfriereffekte des schmelzflüssigen Werkstoffs bevor er bis in die Oberflächenstruktur vorgedrungen ist, so verzögert werden, dass der vorgegebene Glanzgrad 60° und/oder Farbwert L* erreicht wird.

2.  Verfahren zum Spritzgießen nach Anspruch 1,
    **dadurch gekennzeichnet,**
    **dass** als Beschichtung (6) Titan-Nitrid (TiN), Titan-Carbon-Nitrid (TiCN), Chrom-Nitrid (CrN), Wolfram-Carbid-Carbon (WC/C), Titan-Aluminium-Nitrid (TiAlN), $Al_2O_3$, $(AlCr)_2O_3$ oder $SiO_2$ verwendet wird.

3. Verfahren zum Spritzgießen nach Anspruch 2,
**dadurch gekennzeichnet,**
**dass** die Beschichtung aus mehreren übereinander angeordneten Beschichtungen gebildet wird.

4. Verfahren zum Spritzgießen nach einem der Ansprüche 1 bis 3,
**dadurch gekennzeichnet,**
**dass** die Beschichtung (6) in einer Dicke zwischen 7 $\mu$m und 11 $\mu$m erfolgt.

5. Verfahren zum Spritzgießen nach Anspruch 4,
**dadurch gekennzeichnet,**
**dass** die Beschichtung (6) in einer Dicke von $8\pm1$ $\mu$m erfolgt.

6. Verfahren zum Spritzgießen nach einem der Ansprüche 1 bis 5,
**dadurch gekennzeichnet,**
**dass** zwischen der Formoberfläche (4) und der Beschichtung (6) eine Haftschicht angeordnet wird.

7. Verfahren zum Spritzgießen nach Anspruch 6,
**dadurch gekennzeichnet,**
**dass** die Haftschicht aus Titan, Chrom oder TiN gebildet wird.

8. Verfahren zum Spritzgießen nach einem der Ansprüche 1 bis 7,
**dadurch gekennzeichnet,**
**dass** als schmelzflüssiger Werkstoff (1) ein Acryl-Butadien-Styrol-Kunststoff (ABS) verwendet wird.

9. Verfahren nach Anspruch 8,
**dadurch gekennzeichnet,**
**dass** im wesentlichen derselbe Glanzgrad und/oder Farbwert L wie auf einem PP-Spritzling, der in einer unbeschichteten Form hergestellt wurde, eingestellt wird.

10. Verfahren zum Spritzgießen nach Anspruch 8,
**dadurch gekennzeichnet,**
**dass** die Dicke der Beschichtung und die Rauhigkeit der Formoberfläche so eingestellt wird, dass die Oberfläche des erstarrten ABS einen Glanzgrad 60° von ca. 2,7 und/oder einen Farbwert L* von ca. 25 aufweist.

11. Verfahren zum Spritzgießen nach einem der Ansprüche 1 bis 10,
**dadurch gekennzeichnet,**
**dass** die Formoberfläche eine Struktur mit einer Rauhigkeit aufweist, die der Oberfläche des erstarrten Werkstoffs (1) bei Abformung der Rauhigkeit ein mattes Aussehen verleiht.

12. Verfahren zum Spritzgießen nach Anspruch 11,
**dadurch gekennzeichnet,**
**dass** die Rauhigkeit gemessen als Mittenrauwert Ra zwischen 3 $\mu$m und 11 $\mu$m beträgt.

13. Verfahren zum Spritzgießen nach einem der Ansprüche 1 bis 12,
**dadurch gekennzeichnet,**
**dass** der Werkstoff nach dem Einbringen unter Druck gesetzt wird.

14. Verfahren zum Spritzgießen nach einem der Ansprüche 1 bis 13,
**dadurch gekennzeichnet,**
**dass** die Beschichtung eine geringere Wärmeeindringfähigkeit besitzt als das Material der Form.

15. Vorrichtung zum Spritzgießen von schmelzflüssigen Werkstoffen (1), insbesondere Kunststoff, mit einer Form (3), die eine mit dem Werkstoff (1) in Kontakt kommende Formoberfläche (4), mit mindestens einer Beschichtung (6) der Formoberfläche (4) und eine Einrichtung zum Temperieren der Formoberfläche (4) aufweist, wobei die Formoberfläche eine Oberflächenstruktur zum Erzielen eines vorgegebenen Gianzgrades 60° und/oder Farbwertes L* für das Spritzgussteil durch im Wesentlichen exakte Reproduzierung der Formoberfläche durch die Oberfläche des Spritzgussteils aufweist und mit einer thermisch isolierenden Beschichtung versehen ist, wobei die Dicke der Beschichtung der Formoberfläche (4) in Abstimmung mit dem Wärmeeindringkoeffizienten des Schichtmaterials der Beschichtung so gewählt ist, dass Einfriereffekte des schmelzflüssigen Werkstoffs bevor er bis in die Oberflächenstruktur vorgedrungen ist, so verzögert werden, dass der vorgegebene Glanzgrad 60° und/oder Farbwert L* erreicht wird.

**Claims**

1. A method for injection molding fusible materials, in particular plastic materials in a mold (3) with a mold surface (4) coming in contact with the material (1) and provided with at least one coating (6) and with a device for tempering the mold surface (4) including the steps:

   - providing the mold surface with a surface structure for obtaining a predetermined gloss level 60° and/or color value L* for the injection molded component through essentially exact reproduction of the mold surface through the surface of the injection molded component;
   - providing the mold surface with a thermally insulating coating;
   - controlling the temperature of the mold surface;
   - introducing the fusible material into the mold (3);
   - tempering the mold surface (4) through the tempering device so that the fusible material solidifies; and
   - ejecting the injection molded component,

   wherein the thickness of the coating of the mold surface (4) is selected adapted to a heat conduction coefficient of the material of the coating so that solidification effects of the fusible material are delayed until it has penetrated the surface structure, so that the predetermined gloss level 60° and/or color value L* is achieved.

2. The injection molding method according to claim 1, wherein Titanium-Nitride (TiN), Titanium-Carbon-Nitride (TiCN), Chrome-Nitride (CrN), Wolfram-Carbide-Carbon (WC/C), Titanium-Aluminum-Nitride (TiAlN), $Al_2O_3$, $(AlCr)_2O_3$ or $SiO_2$ is used for the coating (6).

3. The injection molding method according to claim 2, wherein the coating is formed from plural coatings that are arranged on top of one another.

4. The injection molding method according to one of the claims 1 through 3, wherein the coating (6) is provided with a thickness between 7$\mu$m and 11$\mu$m.

5. The injection molding method according to claim 4, wherein the coating (6) is provided with a thickness of 8$\pm$1 $\mu$m.

6. The injection molding method according to one of the claims 1 through 5, wherein an adhesion layer is arranged between the mold surface (4) and the coating (6).

7. The injection molding method according to claim 6, wherein the adhesion layer is formed from titanium, chromium or TiN.

8. The injection molding method according to one of the claims 1 through 7, wherein an acrylic-butadiene-styrene plastic material (ABS) is used for the fusible material.

9. The injection molding method according to claim 8, wherein essentially the same gloss level and/or color value L is adjusted like on a PP injection molded part that is produced in an uncoated mold.

10. The injection molding method according to claim 8, wherein the thickness of the coating and the roughness of the mold surface is adjusted so that the surface of the solidified ABS has a gloss level 60° of approximately 2.7 and/or a color value L* of approximately 25.

11. The injection molding method according to one of the claims 1 through 10, wherein the mold surface has a structure with a roughness which provides the surface of the solidified material (1) with a mat appearance when the roughness is captured.

12. The injection molding method according to claim 11, wherein the roughness measured as mean roughness Ra is between 3 $\mu$m and 11 $\mu$m.

13. The injection molding method according to one of the claims 1 through 12, wherein the material is put under pressure after introduction.

14. The injection molding method according to one of the claims 1 through 13, wherein the coating has lower heat conductivity than the material of the mold.

15. A device for injection molding fusible materials (1), in particular plastic materials comprising a mold (3), including a mold surface (4) contacting the material (1) with at least one coating (6) of the mold surface (4) and a device for tempering the mold surface (4), wherein the mold surface includes a surface structure for obtaining a predetermined gloss level 60° and/or color value L* for the injection molded component through essentially exact reproduction of the mold surface through the surface of the injection molded component and is provided with a thermally insulating coating, wherein the thickness of the coating of the mold surface (4) is selected according to the heat conduction coefficient of the layer material of the coating so that solidification effects of the fusible material are delayed before it has penetrated the surface structure so that the predetermined gloss level 60° and/or the color value L* are achieved.

**Revendications**

1. Procédé de moulage par injection de matériaux fondus, en particulier de matière plastique, dans un moule (3) comportant une surface de moule (4) venant en contact avec le matériau (1) et munie d'au moins un revêtement (6), et un dispositif pour équilibrer la température de la surface de moule (4), avec les étapes suivantes :

   - fourniture à la surface de moule d'une structure superficielle pour l'obtention d'un taux de luisance de 60° et/ou d'une valeur chromatique L* prédéfini(e) pour la pièce moulée par injection par une reproduction sensiblement exacte de la surface de moule par la surface de la pièce moulée par injection,
   - fourniture à la surface de moule d'un revêtement thermiquement isolant,
   - commande de la température de la surface de moule,
   - introduction du matériau fondu dans le moule (3),
   - équilibrage de température de la surface de moule (4) par le dispositif d'équilibrage de température de sorte que le matériau fondu se solidifie dans le moule,
   - démoulage de la pièce moulée par injection,

   l'épaisseur du revêtement de la surface de moule (4) étant choisie en accord avec le coefficient de pénétration thermique du matériau de couche du revêtement de sorte que des effets de figeage du matériau fondu avant qu'il pénètre dans la structure superficielle sont retardés de sorte que le taux de luisance de 60° et/ou la valeur chromatique L* prédéfini(e) est atteint(e).

2. Procédé de moulage par injection selon la revendication 1, **caractérisé en ce que**, en tant que revêtement (6), on utilise du nitrure de titane (TiN), du carbonitrure de titane (TiCN), du nitrure de chrome (CrN), du carbure de tungstène enrichi au carbone (WC/C), du nitrure de titane et d'aluminium (TiAlN), $Al_2O_3$, $(AlCr)_2O_3$ ou $SiO_2$.

3. Procédé de moulage par injection selon la revendication 2, **caractérisé en ce que** le revêtement est formé de plusieurs revêtements superposés les uns aux autres.

4. Procédé de moulage par injection selon une des revendications 1 à 3, **caractérisé en ce que** le revêtement (6) s'effectue en une épaisseur entre 7 $\mu$m et 11 $\mu$m.

5. Procédé de moulage par injection selon la revendication 4, **caractérisé en ce que** le revêtement (6) s'effectue en une épaisseur de 8 $\pm$ 1 $\mu$m.

6. Procédé de moulage par injection selon une des revendications 1 à 5, **caractérisé en ce que**, entre la surface de moule (4) et le revêtement (6), il est disposé une couche adhésive.

7. Procédé de moulage par injection selon la revendication 6, **caractérisé en ce que** la couche adhésive est formée de titane, de chrome ou de TiN.

8. Procédé de moulage par injection selon une des revendications 1 à 7, **caractérisé en ce que**, en tant que matériau fondu (1), on utilise une matière plastique acryl-butadiène-styrène (ABS).

**9.** Procédé selon la revendication 8, **caractérisé en ce que** l'on règle sensiblement le même taux de luisance et/ou la valeur chromatique L que sur une pièce injectée PP qui a été fabriquée dans un moule non revêtu.

**10.** Procédé de moulage par injection selon la revendication 8, **caractérisé en ce que** l'épaisseur du revêtement et la rugosité de la surface de moule sont réglées de sorte que la surface de l'ABS solidifié présente un taux de luisance de 60° d'environ 2,7 et/ou une valeur chromatique L* d'environ 25.

**11.** Procédé de moulage par injection selon une des revendications 1 à 10, **caractérisé en ce que** la surface de moule présente une structure ayant une rugosité qui confère un aspect mat à la surface du matériau (1) solidifié lors du formage de la rugosité.

**12.** Procédé de moulage par injection selon la revendication 11, **caractérisé en ce que** la rugosité, mesurée en tant que rugosité moyenne Ra, est comprise entre 3 $\mu$m et 11 $\mu$m.

**13.** Procédé de moulage par injection selon une des revendications 1 à 12, **caractérisé en ce que** le matériau est mis sous pression après la mise en place.

**14.** Procédé de moulage par injection selon une des revendications 1 à 13, **caractérisé en ce que** le revêtement possède une aptitude à la pénétration thermique plus faible que la matière du moule.

**15.** Dispositif pour le moulage par injection de matériaux (1) fondus, en particulier de matière plastique, avec un moule (3) qui présente une surface de moule (4) venant en contact avec le matériau (1) et munie d'au moins un revêtement (6) de la surface de moule (4), et un dispositif pour équilibrer la température de la surface de moule (4), la surface de moule présentant une structure superficielle pour l'obtention d'un taux de luisance de 60° et/ou d'une valeur chromatique L* prédéfini(e) pour la pièce moulée par injection par une reproduction sensiblement exacte de la surface de moule par la surface de la pièce moulée par injection, et étant dotée d'un revêtement thermiquement isolant, l'épaisseur du revêtement de la surface de moule (4) étant choisie en accord avec le coefficient de pénétration thermique du matériau de couche du revêtement de sorte que des effets de figeage du matériau fondu avant qu'il pénètre dans la structure superficielle sont retardés de sorte que le taux de luisance de 60° et/ou la valeur chromatique L* prédéfini(e) est atteint(e).

Fig. 1

Fig. 2

Fig. 3

$$\sqrt{\tfrac{1}{f}}\ \left[\ _{H_z}\ \right]^{-\tfrac{1}{2}}$$

(TiN &) TiCN

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5362226 A